# EUROPEAN PATENT APPLICATION

(11) **EP 1 666 419 A1**
(43) Date of publication of application: **07.06.2006**
(21) Application number: 04716367.0
(22) Date of filing: 02.03.2004
(51) Int. Cl.: C01G 23/04, C22B 34/12

(54) **PROCESS FOR PRODUCING RUTILE**

(30) Priority: 24.09.2003 JP 2003331992
(71) Applicant: Tohoku Techno Arch Co., Ltd., Sendai-shi, Miyagi 980-0845 (JP)
(72) Inventor: NAGASAKA, Tetsuya, Aoba-ku, Sendai-shi, Miyagi 989-3204 (JP); ITOH, Satoshi, Aoba-ku, Sendai-shi, Miyagi 989-3204 (JP)
(74) Representative: Weber, Dieter
(86) International application number: PCT/JP2004/002587
(87) International publication number: WO 2005/028368

(57) **Abstract**

Ilmenite ores are thermally oxidized to form a stable crystal state type intermediate product consisting of two phases (pseudobrookite + rutile) in a stable crystal phase, and the resultant intermediate product can be subjected to a magnetic separation procedure to selectively collect the rutile phase.

## Description

### FIELD OF THE INVENTION

This invention relates to techniques for producing TiO₂-high quality synthetic rutile by upgrading a titanium- and iron-containing ilmenite ore.

### BACKGROUND OF THE INVENTION

In spite of its being lightweight, titanium (Ti) is not only very excellent in strength, thermal stability and corrosion resistance but also highly biocompatible. Ti has intrinsic characteristics such as a nonmagnetic property, and is therefore utilized in the form of metals and/or alloys in various fields covering, for example, from aircraft materials, anticorrosive chemical equipment materials and medical instruments to golf clubs and frames of spectacles, and further in the form of oxides as a pigment and lately as a photocatalyst and in other environmental fields. Currently the starting materials used in the production of titanium are natural rutile, high-quality synthetic rutile, and high-titanium slag. Titanium is mainly obtained by the Kroll process which comprises chlorinating titanium oxide contained therein and reducing the resulting titanium chloride with metallic magnesium. Recently, a process comprising the direct reduction of titanium oxide has also been proposed.

In any case, there is a problem of worldwide progressive exhaustion of the natural rutile resources with high TiO₂ quality (generally with a TiO₂ content of 93 to 96%) which are currently used as the materials for the production of titanium. Therefore, it is desired that a new process should be established for the production of synthetic rutile having a high TiO₂ content comparable to that of natural rutile by upgrading abundantly occurring natural ilmenite ores (mainly composed of iron and titanium oxides, generally containing TiO₂ at 30 to 65% and containing other oxide impurities, including manganese, chromium, vanadium, magnesium, calcium, silicon, aluminum and other oxides).

Ilmenite ores are found naturally in the form of ilmenite (FeTiO₃), weathered ilmenite, and mixtures thereof.

The artificial rutile production techniques used in the prior art include the titanium slag process, selective acid leaching process and selective chlorination process. The titanium slag process comprises subjecting the ilmenite ore to thermal reduction with carbon as a reducing agent, separating the reaction mixture into a molten iron phase and a molten titanate slag phase, and subjecting the titanium oxide-enriched titanate slag to sulfuric acid leaching treatment and the like to give artificial rutile. In this process, when the ilmenite ore is thermally reduced with a carbonaceous material, the iron oxide component in the ore is first preferentially reduced, resulting in the formation of molten iron and molten titanate slag. The titanate slag thus derived from the ore and now enriched in titanium oxide is subjected to acid leaching treatment to give rutile.

In the selective acid leaching process, the ilmenite ore is heated with concentrated sulfuric acid to give a product, to which is then added iron while adding water or diluted sulfuric acid, thereby causing reduction occurrence. In the next step, after the resulting FeSO₄ is removed, the liquid residue is decomposed to recover titanium in the form of hydroxide, and the hydroxide is oxidized to give rutile.

The selective chlorination process comprises the steps of heating the ilmenite ore in an oxidizing atmosphere at 1173 to 1223K to oxidize FeO to Fe₂O₃, adding ground coke at about 8%, reacting the mixture with chlorine gas in a fluidized bed chlorination furnace at 1223K, removing the resulting iron chloride, and recovering synthetic rutile from the resultant product by magnetic separation or flotation.

In utilizing the natural ilmenite ore, in which oxidation has usually progressed as a result of weathering, it is essential to have sufficient data concerning the Fe₂O₃- FeTiO₃-TiO₂ region corresponding to the high oxygen side of the Ti-Fe-O system, for example the equilibrium relationships, phase diagrams and oxygen isobars concerning the Ti-Fe-O ternary system phases and the oxygen partial pressure. Under present conditions, however, sufficient findings about said region have not been obtained as yet. Meanwhile, Webster and Bright (Non-Patent Document 1) and Taylor (Non-Patent Document 2) have reported on the high oxygen side of the FeO-Fe₂O₃-TiO₂ system at 1473K and 1573K, respectively. However, considering the relatively low temperature processing to be employed from the industrial applicability viewpoint, their data cannot be utilized.
[Non-Patent Document 1] A. H. Webster and N. F. H. Bright, J. Am. Ceram. Soc., 44(3), pp. 110-116 (1961)
[Non-Patent Document 2] R. W. Taylor, Am. Miner., 49(7-8), pp. 1016-1030 (1964)

For developing an industrial upgrading process for the production of synthetic rutile having a high TiO₂ content comparable to that of natural rutile via removing iron from natural ilmenite ores abundantly occurring as titanium resources, it is necessary to analyze details of the phase equilibrium of the Fe₂O₃-FeTiO₃-TiO₂ system corresponding to the high oxygen content region of the Ti-Fe-O system at relatively low temperatures and further details of the phase relations as well as the oxygen partial pressure-related equilibrium phase diagram in an industrially applicable temperature range such as around 1373K.

In the conventional processes for producing synthetic rutile by upgrading ilmenite ores, the use of concentrated sulfuric acid and others secondarily leads to the formation of large quantities of acidic liquid wastes. From the viewpoint of environmental issues, this is becoming more and more unacceptable. Hence, there is a demand for an escape from those processes which produce, as byproducts, some or other substances possibly causing an environmental problem or causing a disposal problem and for the development of an advantageous process from the cost viewpoint. In particular, those conventional processes which use a reducing agent and the like or a strong acid have problems: for example, the use of a relatively expensive reagent is required, the recovery of such expensive reagents is required, environmental pollutants are produced in large quantities, byproduct treatment costs money, and/or installation of treatment equipment entails a huge expenditure.

Therefore, there is still a need to develop techniques for producing high-quality synthetic rutile products at low cost in a simplified process while decreasing the byproduct formation.

### SUMMARY OF THE INVENTION

Naturally occurring ilmenite ores have a composition mostly comprising two coexisting phases, i.e., ilmenite (FeTiO₃: α phase) and pseudobrookite (Fe₂TiO₅: P phase), or further rarely coexisting with rutile (TiO₂; R phase). When such ilmenite ores are reduced with a carbonaceous material under heating, their composition shifts to the three phase-coexisting region (Fe + R + α) i.e., metallic iron, rutile and ilmenite coexist with the progress of oxygen removal. Since iron and titanium oxide can form molten slag within the range of high temperatures at which iron is molten, most of titanium oxide in the ores is concentrated in that slag. This is the basic principle of the conventional titanium slag process.

The present inventors have made an extensive investigation on the phase equilibrium in a relatively low temperature range. As a result, the present inventors have succeeded in finding that ilmenite ores can be oxidized at a relatively low temperature around 1100°C (about 1373K) to form, in the ore, a stable crystal phase product composed of two phases pseudobrookite (P phase) and rutile (R phase) in a stable crystal phase, and the resultant product wherein said (P + R) phases are in the phase of stable crystals can be separated by application of a strong magnetic field into the P phase and the R phase. Consequently, they have achieved the present invention.

In an aspect, the present invention provides the following:
(1) A process for upgrading an ilmenite ore to produce high-quality synthetic rutile products which comprises the steps of:
   (a) oxidizing the ilmenite ore to form a stable crystal state type intermediate product consisting of two phases, (pseudobrookite + rutile), in a stable crystal phase,
   (b) then subjecting the resultant intermediate product to a magnetic separation procedure to separate a rutile phase product as a fraction substantially nonresponsive to a magnetic field, and
   (c) recovering the rutile phase product from others.
(2) The process according to the above (1), wherein the ilmenite ore oxidation is carried out without allowing any reductive reaction.
(3) The process according to the above (1) or (2), wherein the starting ore almost consisting of monophase ilmenite grains is oxidized to form a stable crystal state type intermediate product consisting of two phases, (pseudobrookite + rutile), in a stable crystal phase.
(4) The process according to any of the above (1) to (3), wherein the starting ore is oxidized under non-reducing conditions to form a stable crystal state type intermediate product consisting of two phases, (pseudobrookite + rutile), in a stable crystal phase, the resultant intermediate product is then pulverized so as to give (1) fine particles substantially composed of pseudobrookite and (2) fine particles substantially composed of rutile, the pulverized fine particles are subjected to a magnetic separation procedure to separate a rutile phase product as a fraction substantially nonresponsive to a magnetic field, and the high-quality rutile phase product was recovered.
(5) The process according to the above (4), wherein the pulverization step is carried out once or repeated plural times.
(6) The process according to any of the above (1) to (5), wherein products from the ilmenite ore oxidation step is subjected, under conditions free from any reduction step, to a magnetic separation procedure wherein products composed of rutile are separated from products composed of pseudobrookite.
(7) The process according to any of the above (1) to (6), wherein the magnetic separation procedure is carried out once or repeated plural times.
(8) The process according to any of the above (1) to (7), wherein the oxidation is carried out at a temperature ranging from 700 to 1200°C.
(9) The process according to any of the above (1) to (8), wherein the magnetic separation procedure is carried out under magnetic conditions ranging from 0.4 to 10 teslas.
(10) The process according to any of the above (1) to (9), wherein that the resultant rutile phase product has a TiO₂ level of not lower than 90%.
(11) The process according to any of the above (1) to (10), wherein the process until the production of high-quality synthetic rutile products from the ilmenite ore is substantially free of any reduction.

The inventive techniques require a less amount of energy to be consumed, and no carbonaceous material, etc. as a reducing agent, as compared to the conventional titanium slag process. For separating rutile from the reaction products, no special treatment (such as sulfuric acid leaching which is essential in the titanium slag process) is required in the inventive process.

The above objects and other objects, features, advantages, and aspects of the present invention are readily apparent to those skilled in the art from the following disclosures. It should be understood, however, that the description of the specification including the following best modes of carrying out the invention, examples, etc. is illustrating preferred embodiments of the present invention and given only for explanation thereof. It will become apparent to the skilled in the art that a great number of variations and/or alterations (or modifications) of this invention may be made based on knowledge from the disclosure in the following parts and other parts of the specification without departing from the spirit and scope thereof as disclosed herein. All of the patent publications and reference documents cited herein for illustrative purposes are hereby incorporated by reference into the present disclosure.

### BRIEF DESCRIPTION OF THE DRAWINGS

Fig. 1 shows the formulations of samples used in determinations of the Fe₂O₃- FeTiO₃-TiO₂ system phase equilibrium at 1373K. Each circle accompanied by a numeral indicates the point corresponding to one of respective test sample formulations, and each numeral indicates a sample number.
Fig. 2 shows the experimental results of Sample No. 7 for relations between the heating time and the compositions of the α phase (hematite-ilmenite s.s.) and the P phase (pseudobrookite s.s.) at 1373K.
Fig. 3 shows a phase diagram of the Fe₂O₃-FeTiO₃-TiO₂ system at 1373K.
Fig. 4 shows relations between the Ti-Fe-O system compositions and the oxygen partial pressure at 1373K.
Fig. 5 shows representatives of natural ilmenite ore compositions in the Fe₂O₃-FeTiO₃-TiO₂ system phase diagram.
Fig. 6 shows the experimental results for the magnetic susceptibilities of ilmenite ore-derived P and R phases.
Fig. 7 shows the X ray diffraction analysis results of the product obtained by thermal oxidation of an ilmenite ore, in comparison with the results prior to heat treatment.

### BEST MODES OF CARRYING OUT THE INVENTION

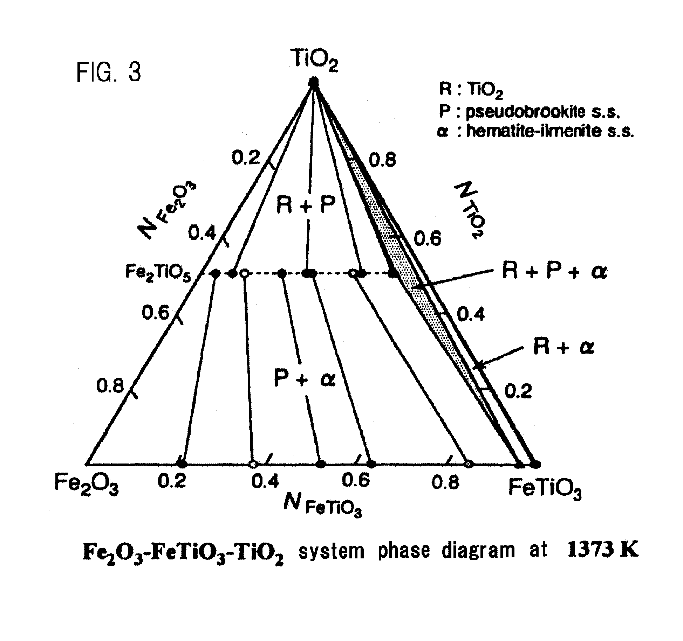

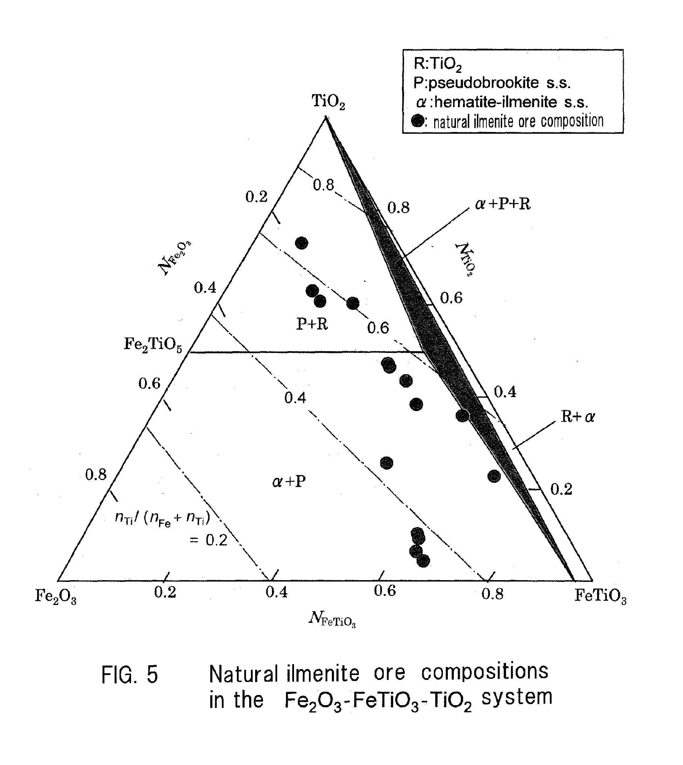

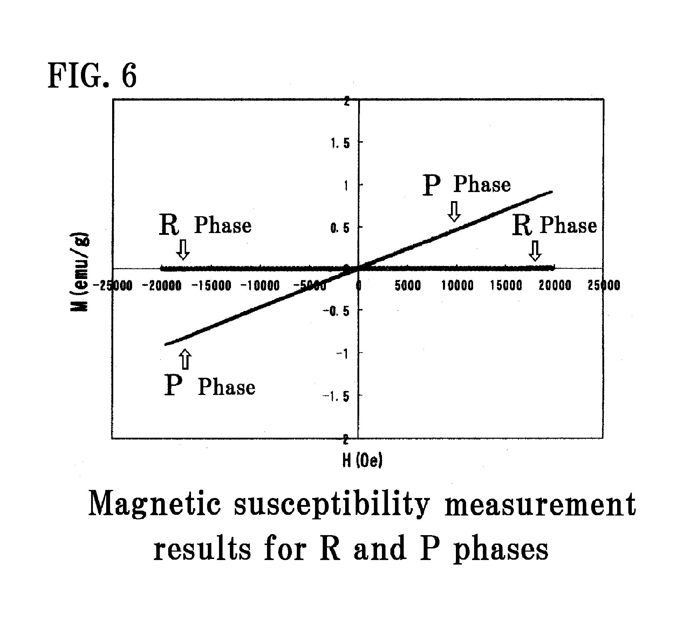

Upon careful study of the Fe₂O₃-FeTiO₃-TiO₂ system phase diagram at 1373K (Fig. 3), revealed by the present inventors, it becomes apparent that naturally occurring ilmenite ores are distributed along the ternary α + R + P phase-coexisting region centering around the α phase, as shown in Fig. 5. It also becomes apparent that oxidation of the ore leads to an increase in only the oxygen content of the ore composition, wherein the composition shifts obliquely from the lower right corner of the triangle shown in Fig. 5 toward the upper left at an angle of about 45 degrees. Thus, it is understood that oxidation of the ilmenite ore will drive the same into the binary R + P phase-coexisting region. If this product composed of the two phases (R + P) is separated into the R phase and the P phase, rutile is expected to be produced in a relatively easy manner without consuming a large amount of energy in treating the ore, differently from the prior art. Further, paying attention to the R and P phases, the present inventors have examined their magnetic susceptibilities. As a result, the present inventors have succeeded in finding that the magnetic susceptibility of the P phase is almost comparable to that of ferric oxide (Fe₂O₃) while the magnetic susceptibility of the R phase is negligibly small, as shown in Fig. 6. Thus, the P phase can be magnetically attracted and removed from the oxidized ilmenite ore in a strong magnetic field of about several teslas wherein the R phase (rutile) can be selectively separated and recovered.

The raw materials to be used in the process for producing upgraded rutile according to the invention include those capable of giving high-quality synthetic rutile products each having a TiO₂ content of at least 90% or higher (in some instances, rutile products each having a TiO₂ content exceeding at least 92%). They also include natural ilmenite ores containing iron and titanium, for example, those ores having an n_{Ti}/(n_{Fe} + n_{Ti}) ratio of 0.35 to 0.65, more preferably an n_{Ti}/(n_{Fe} + n_{Ti}) ratio of 0.5 to 0.65, wherein nᵢ stands for a molar number.

In the inventive upgrading process, the raw material ore is first subjected to oxidative treatment. The oxidative treatment is not particularly restricted, but may be carried out under any condition as long as it is capable of substantially forming at least the two phases (pseudobrookite + rutile) in a stable crystal phase. For the oxidation, a variety of appropriate conditions can be selected. Said oxidation can be carried out via bringing for example the raw material ore and an oxidizing agent into contact with each other at an elevated temperature, for example, at a temperature ranging from about 700 to 1200°C, preferably from about 900 to 1100°C.

Preferable oxidation conditions are those capable of providing the sufficient growth and profitable formation of the rutile phase. However, since it is also required to save as much energy as possible for the heat treatment, it is desirable to select treatment conditions at as low temperature as possible in as short time as possible. Although a higher temperature and a longer retention time are, in general, favorable for the growth of rutile phase crystal grains (rustle crystal particles), it is preferable to select suitably optimal conditions depending on mining places in which starting ores are produced, because titanium is one of the most abundant metal elements on the earth and ilmenite ores are mined in various places, accompanying a subtle distinction in coexisting impurity elements according to the mining place. Preferred treatment conditions can be determined after clarifying the relations between heat treatment temperature, retention time, etc., and microstructures. The oxidation includes preferably those techniques capable of transforming a starting material containing almost an ilmenite monophase into a product composed of two phases (pseudobrookite + rutile) in a stable crystal phase. The oxidation of the starting ore is carried out under conditions substantially free of any reductive reaction occurrence.

In carrying out the oxidative treatment, the starting ore is suitably used in a ground or pulverized form. The ground or pulverized starting materials are preferred because such materials can be readily brought into contact with an oxidizing agent (e.g. oxygen). The ground or pulverized starting materials may include those prepared according to the steps of grinding the starting ore to produce a granular or powdery product, which is then sieved through a screen to separate a fraction with a grain or particle size within a certain specified range. This relevant procedure can be carried out with an apparatus generally known to those skilled in the art. The grain/particle size is not particularly limited to as long as the oxidative treatment is substantially performable and desired results are obtainable, but it is possible for those skilled in the art to suitably select an appropriate size. In this oxidation step, the starting material may be oxidized in a fluidized state. It is also preferable to use a reaction apparatus equipped with a fluidized bed for bringing the ore particles into contact with an oxidizing agent. The starting ore may be appropriately preheated.

During the oxidative treatments, the starting ore is preferably retained in the reaction apparatus for a period sufficient to cause the intended alteration or transformation, for example, for 10 minutes to 200 hours, in sometimes for 20 minutes to 36 hours, and for 40 minutes to 10 hours in other cases. It is still possible to select an appropriate period of time according to the specific ore species. The oxidizing agent may include oxygen- or ozone-containing gases, and preferably an oxygen-containing gas. The oxygen-containing gas may include air, mixtures of oxygen with an inert gas, oxygen-enriched air, and others. Typically, this oxidative treatment causes the composition to shift, in the phase diagram shown in Fig. 5, from the lower right corner obliquely toward the upper left at an angle of about 45 degrees, finally giving a product composed of two coexisting phases (pseudobrookite + rutile).

The resultant product composed of two coexisting phases (pseudobrookite + rutile) is finely pulverized, depending on necessity, to form first fine particles substantially consisting of pseudobrookite and second fine particles substantially consisting of rutile. It is not always necessary that respective fine particles should be absolutely constituted of a single crystal phase, but it is only required that second particles substantially consisting of the rutile crystal phase alone or particles containing the rutile crystal phase at a level of at least 90% or higher can be separated from first particles substantially rich in pseudobrookite in a separation step using a magnetic field (magnetic separation step). It is preferable to select a suitable particle size (grain size) according to the crystal size of the rutile phase formed through the oxidation step. If necessary, the finely pulverized product can be screened or classified through a screen(s) to give a fraction consisting of products within a certain particle size range. The pulverization step can be carried out with a grinder/pulverizer known in the art; for example, jet mills, micronizers or the like can be used.

The finely pulverized product is then subjected to the magnetic separation (magnetic fractionation) step using a magnetic field. For the magnetic separation, any magnetic separator known in the art can be used; for example, a magnetic separator suited for the wet or dry method can be used. The magnetic separator may include high gradient magnetic separators, magnetic concentrators, drum type magnetic separators and coupled pole type magnetic separators, and others. It is, however, possible to use a most suitable magnetic separator selected.

The separation utilizing a magnetic field can be done once or repeated plural times. In some instances, repeated separations are preferred. The magnetic separation can be carried out in a magnetic field ranging from 0.4 to 10 teslas, in some instances from 8 x 10⁻² to 6 teslas, and from 1 to 5 teslas in other cases. Generally, the magnetic field intensity required for the magnetic separation is desirably as low as possible but that intensity can be selected so as to give an optimal separation efficiency depending on crystal sizes and other factors. In cases where the magnetic separator is equipped with a filter or the like, optimal mesh sizes of the filter are preferably selected so as to improve the magnetic separation efficiency. It is also preferable to select adequately any filter mesh size depending on the particle size of the starting pulverized product. In the magnetic separation, wet methods are, in some instances, preferred which comprise the steps of suspending the starting pulverized product in a fluid medium such as water and subjecting the suspension to magnetic separation.

The upgraded rutile products (synthetic rutile products) thus-obtained can be used in the processes known in the relevant art and in various conventional titanium product manufacturing processes in which rutile ores are used as starting materials. Thus, it is useful for the production of titanium by the Kroll process or for pigment producing industries.

Such combinations with the technologies known in the art also fall within the scope of the technology of the present invention.

Details of the present invention are described by the following examples but such examples are provided only for illustrative purposes, and for referential embodiments of the present invention. These examples have been described herein for the purpose of illustrating specific embodiments of the present invention but should in no way be construed as limiting and restricting the scope of the invention disclosed herein. It should be understood in the present invention that various embodiments can be made or executed within the spirit, scope and concept disclosed herein

All the examples were carried out or can be carried out, unless otherwise disclosed herein specifically, by standard techniques which are well known and conventional to those skilled in the art.

### Example 1

### (1) Phase equilibrium determinations at 1373K

In advance, FeTiO₃ was prepared as follows:
Electrolytic iron powders (purity: 99.9 mass%), commercially available Fe₂O₃ and TiO₂ (both: special reagent grade) were weighed (total: 2.5 g, iron : Fe₂O₃: TiO₂ = 1:1:3 in a molar ratio), and mixed well in an agate mortar. The resultant mixture was compression-molded at about 400 MPa (about 110 kgf/cm²) to give a briquette with a diameter of 10 mm. The briquette was in vacuo encapsulated in a quartz tube with an inside diameter of 13 mm to give a capsule, which was heated at 1373K for 3 days and then quenched in water to form synthetic FeTiO₃. The product was ascertained to be FeTiO₃ based on X ray diffraction patterns.

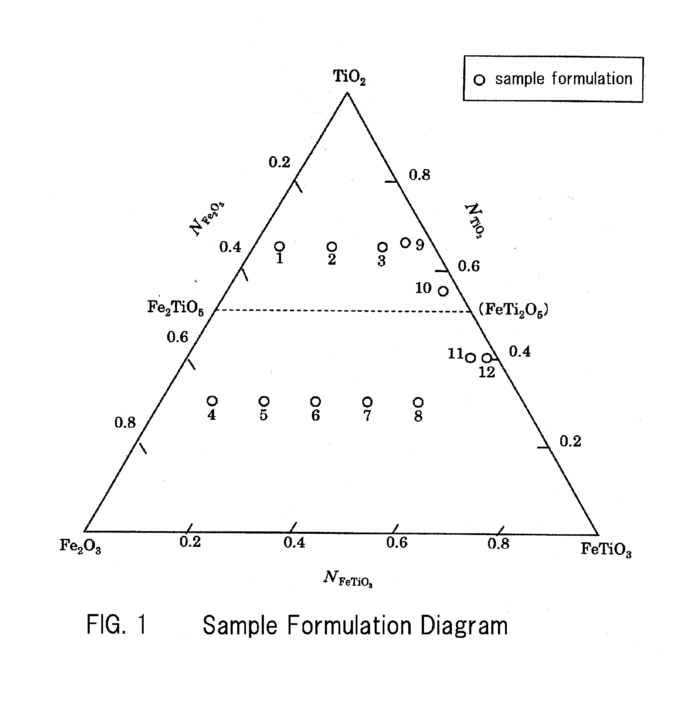

Each test sample was prepared in the following manner:
FeTiO₃ (prepared according to the aforementioned process), commercially available Fe₂O₃ and TiO₂ (both: special reagent grade) were weighed (total: 2.5 g) at predetermined composition ratios, and mixed well in an agate mortar. The resultant mixture was compression-molded at about 400 MPa (about 110 kgf/cm²) to give a briquette with a diameter of 10 mm. The briquette was in vacuo encapsulated in a quartz tube with an inside diameter of 13 mm to give a capsule, which was heated at 1373K for a predetermined period of time for sufficient equilibration and then quenched in water. After quenching, the sample was taken out of the capsule and analyzed. The test sample formulations are shown in Table 1 and Fig. 1. In Fig. 1, each circle indicates a sample formulation, and each numeral in the drawing is a sample number.

For the purpose of heating, a vertical type KANTHAL coil electric resistance furnace was used, an X ray diffractometer (XRD) was used for identifying the phases in each sample and an electron probe X ray microanalyzer (EPMA) was used for phase composition analysis. EPMA measurement results are shown in Tables 2 and 3.

**Table 1 Sample Permutations**

| Sample No. | Fe₂O₃ (g) | FeTiO₃ (g) | TiO₂ (g) | Total (g) | Fe₂O₃ (mol%) | FeTiO₃ (mol%) | TiO₂ (mol%) |
|---|---|---|---|---|---|---|---|
| 1 | 1.11515 | 0.17694 | 1.20855 | 2.50019 | 30.00 | 5.00 | 65.00 |
| 2 | 0.74898 | 0.53360 | 1.21747 | 2.50005 | 20.00 | 15.00 | 65.00 |
| 3 | 0.37723 | 0.89602 | 1.22669 | 2.49994 | 10.00 | 25.00 | 65.00 |
| 4 | 1.77496 | 0.28105 | 0.44391 | 2.49992 | 60.01 | 10.00 | 29.99 |
| 5 | 1.48797 | 0.56555 | 0.44664 | 2.50016 | 50.00 | 20.00 | 30.00 |
| 6 | 1.19738 | 0.85328 | 0.44929 | 2.49995 | 40.00 | 30.00 | 30.00 |
| 7(1day) | 0.90335 | 1.14448 | 0.45194 | 2.49977 | 30.00 | 40.00 | 30.00 |
| 7(3days) | 0.90351 | 1.14454 | 0.45191 | 2.49996 | 30.00 | 40.00 | 30.00 |
| 7(5days) | 0.90347 | 1.14455 | 0.45200 | 2.50002 | 30.00 | 40.00 | 30.00 |
| 7(7days) | 0.90338 | 1.14455 | 0.45203 | 2.49996 | 30.00 | 40.00 | 30.00 |
| 8 | 0.60594 | 1.43932 | 0.45468 | 2.49994 | 20.00 | 50.00 | 30.00 |
| 9 | 0.19061 | 1.05051 | 1.25880 | 2.49992 | 5.00 | 29.00 | 66.00 |
| 10 | 0.10650 | 1.41664 | 0.97691 | 2.50005 | 3.00 | 42.00 | 55.00 |
| 11 | 0.16184 | 1.69086 | 0.64751 | 2.50021 | 5.00 | 55.00 | 40.00 |
| 12 | 0.06481 | 1.78650 | 0.64879 | 2.50010 | 2.00 | 58.00 | 40.00 |

### (2) Term requisite for equilibrium

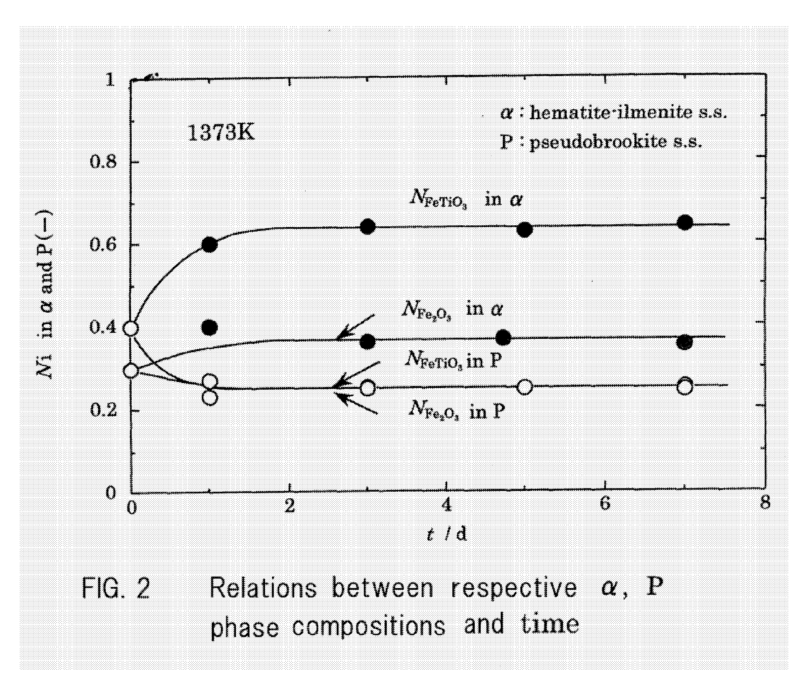

The sample No. 7 was examined for the relationship between heating periods and α phase (hematite ilmenite solid solution (s.s.): ilmenite)/P phase (pseudobrookite s.s: pseudobrookite) compositions. The experimental results are shown in Fig. 2. From Fig. 2, it was found that a composition close to the equilibrium composition was already obtained after about 2 days (2 d). Therefore, a period of three days (3 d) was selected as the heating maintenance time for complete equilibrium attainment in other samples differing in composition as well. In Fig. 2, Ni indicates the mole fraction of each component in the Fe₂O₃- FeTiO₃-TiO₂ ternary system, and "s.s." means a solid solution state.

**Table 2 EPMA Analysis Results**

| Sample No. | R Phase | | | P Phase | | | | α Phase | | | |
|---|---|---|---|---|---|---|---|---|---|---|---|
| | mass%Ti | mass%Fe | *N*^{'}_{TiO2} | mass%Ti | mass%Fe | *N*^{'}_{Fe₂TiO5} | *N*'_{FeTi₂O5} | mass%Ti | mass%Fe | *N'*_{Fe₂O₃} | *N'*_{FeTiO₃} |
| 1 | 56.28 | 1.24 | 1.00 | 22.82 | 43.24 | 0.8572 | 0.1428 | - | - | - | - |
| 2 | 58.61 | 0.76 | 1.00 | 29.83 | 36.07 | 0.5273 | 0.4727 | - | - | - | - |
| 3 | 58.27 | 0.58 | 1.00 | 35.32 | 30.56 | 0.2780 | 0.7220 | - | - | - | - |
| 4 | - | - | - | 21.41 | 45.20 | 0.9327 | 0.0673 | 6.51 | 63.40 | 0.7862 | 0.2138 |
| 5 | - | - | - | 24.01 | 42.17 | 0.8031 | 0.1969 | 11.32 | 58.09 | 0.6297 | 0.3703 |
| 6 | - | - | - | 27.69 | 38.72 | 0.6360 | 0.3640 | 16.21 | 53.25 | 0.4781 | 0.5219 |

**Table 3 EPMA Analysis Results**

| Sample No. | R Phase | | | P Phase | | | | α Phase | | | |
|---|---|---|---|---|---|---|---|---|---|---|---|
| | mass%Ti | mass%Fe | *N'*_{TiO₂} | mass%Ti | mass%Fe | *N'*_{Fe₂TiO₅} | *N*'_{FeTi₂O₅} | mass%Ti | mass%Fe | *N'*_{Fe₂O₃} | *N'*_{FeTiO₃} |
| 7 | - | - | - | 30.82 | 35.77 | 0.4993 | 0.5007 | 19.97 | 49.59 | 0.3655 | 0.6345 |
| 8 | - | - | - | 33.97 | 31.15 | 0.3207 | 0.6793 | 26.60 | 41.95 | 0.1499 | 0.8501 |
| 9 | 58.66 | 0.47 | 1.00 | 38.22 | 27.36 | 0.1413 | 0.8587 | - | - | - | - |
| 10 | 57.44 | 0.36 | 1.00 | - | - | - | - | 31.40 | 36.89 | 0.0038 | 0.9962 |
| 11 | 57.81 | 0.71 | 1.00 | 38.36 | 27.09 | 0.1317 | 0.8683 | 30.56 | 38.28 | 0.0359 | 0.9641 |
| 12 | 58.55 | 0.43 | 1.00 | - | - | - | - | 32.12 | 36.62 | 0 (-0.0112) | 1.00 (1.0112) |

### (3) Phase relations for the Fe₂O₃·FeTiO₃·TiO₂ system (phase diagram)

The R phase refers to a pure TiO₂ phase, the P phase to a pseudobrookite solid solution that occurs in the Fe₂TiO₅-FeTi₂O₅ pseudobinary system, and the α phase to an Fe₂O₃-FeTiO₃ solid solution that occurs in the Fe₂O₃-FeTiO₃ pseudobinary system. The XRD revealed that Sample Nos. 1, 2, 3 and 9 were composed of coexisting two phases, R and P phases; Sample Nos. 4 to 8 composed of coexisting two phases, P and α phases; Sample Nos. 10 and 12 composed of coexisting two phases, R and α phases; and Sample No. 11 composed of coexisting three phases, R, P and α phases. The samples were analyzed with EPMA. The EPMA analysis results are shown in Tables 2 and 3. The EPMA analysis was carried out for iron and titanium. The phase diagram of the Fe₂O₃·FeTiO₃·TiO₂ system at 1373K is shown in Fig. 3. In Fig. 3, the lines connecting black circles are tie lines representing oxygen isobars (activity). Characteristically, it has been found that FeTi₂O₅ is absent at the temperature of 1373K, a region wherein three condensed phases R + P + α coexist is present (stippled field), and said region is fairly narrow. At temperatures higher than 1473K, this ternary condensed phase-coexisting region does not occur but the P phase occurs in the overall composition ranges of the Fe₂TiO₅-FeTi₂O₅ pseudobinary system. Therefore, it is considered that FeTiO₃ is more stable than FeTi₂O₅ at such a low temperature as 1373K. As a result, the ternary condensed R + P + α phase-coexisting region appears and the solubility range of pseudobrookite s.s. is restricted.

### (4) Equilibrium oxygen partial pressure

Each of equilibrated test samples obtained in the manner given in the above (1) was used as a measurement electrode in an oxygen concentration cell with a zirconia solid electrolyte, and the equilibrium electromotive force of each cell thus constituted was measured.
(a) Measurement electrode:
   The zirconia electrolyte was a flat-bottomed tube (outside diameter: 15 mm, inside diameter: 11 mm, and height: 100 mm) closed at one end and stabilized with 11 mol% CaO. A Pt wire with a coiled end was placed in the tube, and each test sample was placed thereon and pressed together tightly. Further used was an 11 mol% CaO-stabilized zirconia solid electrolyte round-bottomed tube (outside diameter: 10 mm, inside diameter: 7 mm, and height: 50 mm) closed at one end and provided with a bottom hole for the passage of a lead wire. This round-bottomed tube closed at one end and having a hole bored at the bottom was inserted into the sample-containing round-bottomed tube closed at one end, and then pressed against the same by means of a mullite tube (outside diameter; 5 mm, and inside diameter: 3 mm).
(b) Standard electrode:
   Fe was mixed together with FeO at a volume ratio of 1:1 (Fe : FeO), the resulting mixture was placed in an iron crucible with a Pt wire inserted on the inside bottom thereof and compacted for use. The end of the Pt wire was coiled so that the contact thereof with Fe and FeO might be improved. The aforementioned measurement electrode (flat-bottomed tube closed at one end and having an outside diameter of 15 mm) was placed on this compressed Fe-FeO mixture to constitute a cell.

The thus-constituted cell was placed in a transparent quartz reaction tube, through which purified argon gas was passed at a flow rate of about 1.7 x 10⁻⁶ m³(STP)s⁻¹. Heating was carried out in a Kanthal coil resistance furnace. Electromotive force measurements were done with a precision DC potentiometer and a digital multimeter with an input impedance of 1000 MΩ. After fully stabilized electromotive force values were ascertained, each sample was measured at least 10 times at 0.3 ks intervals, and the mean value of observed data was employed as a measured value. It was ensured from the following fact:
after arrival at the reversible equilibrium potential of the cell, a
voltage of several 100mV was applied to both electrodes for a very
short period, with the result that the disconnection of impressed
voltage will restore the original equilibrium value and the application
of a reverse-directional voltage will give the same recovery process.
However, a long period of time was required for arrival at the equilibrium electromotive force; 24 hours or longer in most cells, and several hours even in cases where it was attained for a shorter period.

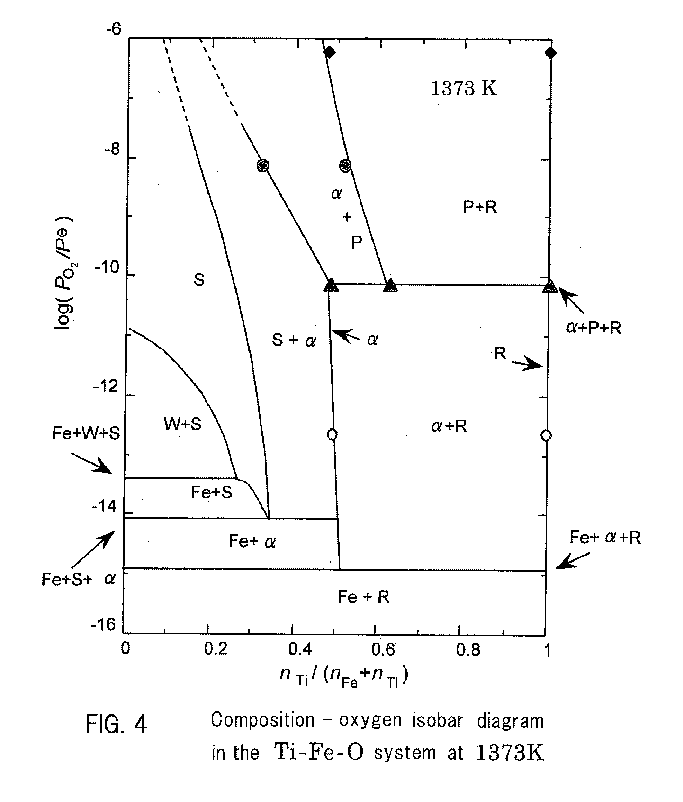

Equilibrium oxygen partial pressures were determined from electromotive force data and temperature data, and the relations between the Ti-Fe-O system composition and the oxygen partial pressure were estimated. The relations between the logarithmic oxygen partial pressures and the n_{Ti}/(n_{Fe} + n_{Ti}) ratios are shown in Fig. 4 (composition-pressure phase diagram). Here, nᵢ stands for a molar number. In Fig. 4, R stands for TiO₂, P for the pseudobrookite solid solution (s.s.), α for the hematite-ilmenite s.s., W for wustite, and Fe for iron.

### (5) Upgrading from natural ilmenite ores to TiO₂

The compositions of natural ilmenite ores fall within the n_{Ti}/(n_{Fe} + n_{Ti}) ratios of from 0.35 to 0.65. When referred to the Fe₂O₃-FeTiO₃-TiO₂ system phase diagram as shown in Fig. 3, this situation can be expressed as shown in Fig. 5.

In view of Fig. 4, ores with an n_{Ti}/(n_{Fe} + n_{Ti}) ratio of not higher than 0.5 can be reduced to afford Fe + R, namely the R phase (TiO₂) is obtainable as a separate phase. Further, it is seen that ores with an n_{Ti}/(n_{Fe} + n_{Ti}) ratio of not lower than 0.5 can be not only reduced but also conversely oxidized even over all oxygen partial pressure ranges to give an intermediate product wherein the R phase occurs as a separate phase, such as α + R and P + R. Thus, the data show that natural ilmenite ores can be upgraded to TiO₂ unexpectedly via an oxidation step.

Natural ilmenite ores (with n_{Ti}/(n_{Fe} + n_{Ti}) ratios of 0.5 to 0.65) were subjected to oxidative treatments. The oxidative treatment was carried out by heating at 1273 to 1473K in air for a predetermined period of time. Upon oxidation of the ores, only the oxygen content in each ore composition increased, and the composition shifted from the lower right corner in Fig. 5 obliquely toward the upper left in the direction of about 45 degrees. Thus, the oxidation of ilmenite ores gives products wherein the two phases R + P coexist.

An ilmenite ore mined in Australia was subjected to oxidative treatments. The ore composition is shown in Table 4 (expressed in % by weight). The titanium content of said ore was about 31.3%, and the Ti/Fe ratio was 1.19. As for the properties thereof, it occurred in the form of fine particles with a particle size of about 1 mm or smaller. This ore was heat-treated for oxidation in a porcelain crucible in an electric furnace open to the atmosphere while varying the retention time and maintenance temperature.

As a result, the formation of the rutile phase was verified when the ore was heat-treated in air at 1000°C for 2 days.

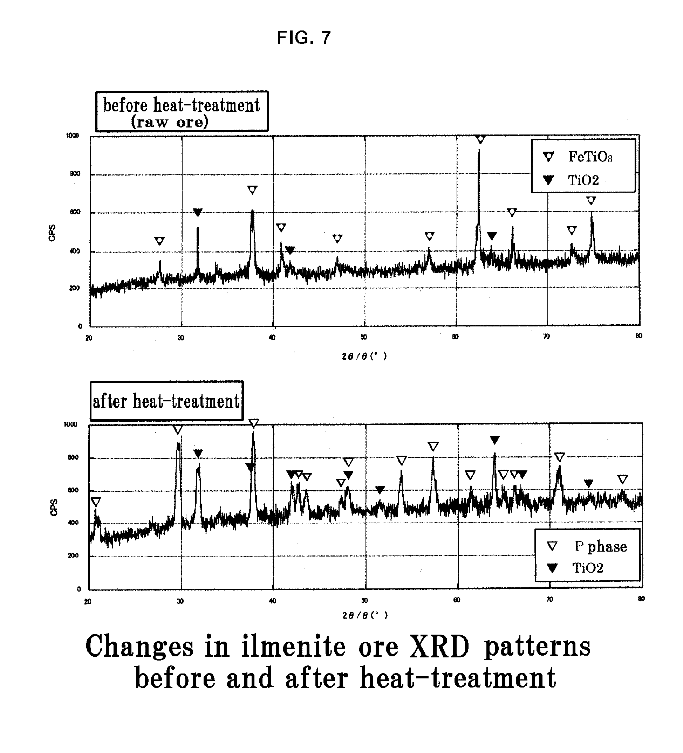

The results of X ray diffraction analysis are shown in Fig. 7 in comparison with the results prior to heat treatment.

**Table 4**

| TiO₂ | TFe | FeO | Fe₂O₃ | MnO | SiO₂ |
|---|---|---|---|---|---|
| 52.21 | 26.4 | 26.14 | 16.71 | 1.73 | 1.52 |
| Al₂O₃ | P₂O₅ | Cr₂O₃ | V₂O₅ | MgO | CaO |
| 1.00 | 0.005 | 0.02 | 0.12 | 0.4 | 0.14 |
| (% by weight) | | | | | |

From Fig. 7, it is seen that the raw ore prior to oxidation by heat treatment is constituted of the major constituent ilmenite (FeTiO₃; α phase) and a minor proportion of rutile (TiO₂; R phase), but thermal oxidation in air at 1000°C for 2 days leads to the disappearance of the ilmenite phase and the transformation of constituent crystal phases into pseudobrookite (Fe₂TiO₅; P phase) and rutile. This is confirmed to be as expected from the phase diagrams shown in Figs. 3 to 5.

### (6) Magnetic susceptibilities of P phase and R phase

The magnetic susceptibilities of the ilmenite ore-derived rutile (R phase) and pseudobrookite s.s. (P phase) were measured. The results are shown in Fig. 6. As compared with the P phase, the R phase was found to have a negligibly smaller magnetic susceptibility value. Thus, the P phase can be removed from the oxidized ilmenite ore via magnetically attracting the same by application of a strong magnetic field of several teslas. As a result, the R phase (rutile) can be selectively separated and recovered.

(a) The ore obtained by thermal oxidation for 2 days in air at 1000°C in the aforementioned step (5) was pulverized into powder with a particle size of about 0.1 mm or smaller. The powder was subjected to a magnetic separation procedure (magnetic fractionation procedure) with a vertical type superconducting magnetic separator. Said magnetic separator is a bismuth oxide superconductor-equipped magnetic separator (owned by "Iwate Industry Promotion Center", Japan) capable of generating a magnetic field of 10 teslas at maximum, wherein 40 stainless-steel mesh filters (mesh size: not larger than 0.5 mm) are sandwiched in a tubular stainless steel separating chamber (tube inside diameter: 20 cm) inserted in a magnetic field generating coil and the meshes themselves are magnetized so that the pseudobrookite phase is magnetically attracted and the nonmagnetic rutile is obtained from the lower portion of the stainless steel tube.

The magnetic field intensity was set at 5 teslas, and the finely pulverized heat-treated ores were allowed to fall from the stainless steel tube upper part of the aforementioned magnetic separator into the separating chamber for magnetic separation. The pseudobrookite phase was magnetically attracted to the stainless mesh filters and soon caused clogging. After removal of all the filters, the powder samples were again charged into the separator from the upper part of the stainless steel tube. As a result, approximately an half of the powder in a volume ratio was magnetically attracted to the inside wall of the stainless steel tube, and the remaining portion fell to the lower portion. The fraction magnetically adhering to the inside wall of the stainless steel tube was rich in pseudobrookite phase, and the fraction that had fallen was very rich in rutile.

(b) Wet magnetic separation was done with the same magnetic separator as used in the above process (a).

In this experiment, an aliquot of the same powder sample as used in the above process (a) was suspended in distilled water (water : powder sample ratio = about 100 : 5). The suspension was poured from the top of the stainless steel tube, and the separation was carried out in the same manner as in the above process (a). The initial suspension sample occurred as a liquid having a fairly dark brown color owing to the dark brown color of the pseudobrookite phase. The liquid collected after one passage through the magnetic separation chamber had a yellowish pale brown color, and the liquid collected after further two passages through the magnetic separation chamber occurred as an ocher-colored liquid with an increased degree of whiteness. Thus, the color became white as the number of magnetic separation procedures increased. It has been shown that, upon magnetic separation procedures, the dark brown pseudobrookite phase is preferentially separated by magnetic attraction, and the white rutile remains in the liquid relatively abundantly, i.e., the P phase can be magnetically attracted and removed from the oxidized ilmenite ore and the R phase (rutile) can be selectively separated and recovered.

### INDUSTRIAL APPLICABILITY

In accordance with the present invention, the inventive process for upgrading ilmenite ores can give a product constituted of rutile (R phase) and pseudobrookite s.s. (P phase) via oxidation at a relatively lower temperature, as compared to the titanium slag process, and the resultant product can be subjected to a magnetic separation procedure wherein the R phase will be separated from the P phase. Therefore, the amounts of necessary energy and the cost are expected to be markedly reduced. The process never produces a problem including the formation of large amounts of wastes possibly causing environmental pollution. The treatment steps involved are only composed of oxidation and magnetic separation steps, which are very simple, and equipment costs can also be reduced.

While the present invention has been described specifically in detail with reference to certain embodiments and examples thereof, it would be apparent that it is possible to practice it in other forms. In light of the disclosure, it will be understood that various modifications and variations are within the spirit and scope of the appended claims.

## Claims

1. A process for upgrading an ilmenite ore to produce high-quality synthetic rutile products which comprises the steps of:
(a) oxidizing the ilmenite ore to form a stable crystal state type intermediate product consisting of two phases, (pseudobrookite + rutile), in a stable crystal phase,
(b) then subjecting the resultant intermediate product to a magnetic separation procedure to separate a rutile phase product as a fraction substantially nonresponsive to a magnetic field, and
(c) recovering the rutile phase product from others.

2. The process according to Claim 1, wherein the ilmenite ore oxidation is carried out without allowing any reductive reaction.

3. The process according to Claim 1 or 2, wherein the starting ore almost consisting of monophase ilmenite grains is oxidized to form a stable crystal state type intermediate product consisting of two phases, (pseudobrookite + rutile), in a stable crystal phase.

4. The process according to any of Claims 1 to 3, wherein the starting ore is oxidized under non-reducing conditions to form a stable crystal state type intermediate product consisting of two phases, (pseudobrookite + rutile), in a stable crystal phase, the resultant intermediate product is then pulverized so as to give (1) fine particles substantially composed of pseudobrookite and (2) fine particles substantially composed of rutile, the pulverized fine particles are subjected to a magnetic separation procedure to separate a rutile phase product as a fraction substantially nonresponsive to a magnetic field, and the high-quality rutile phase product was recovered.

5. The process according to Claim 4, wherein the pulverization step is carried out once or repeated plural times.

6. The process according to any of Claims 1 to 5, wherein products from the ilmenite ore oxidation step is subjected, under conditions free from any reduction step, to a magnetic separation procedure wherein products composed of rutile are separated from products composed of pseudobrookite.

7. The process according to any of Claims 1 to 6, wherein the magnetic separation procedure is carried out once or repeated plural times.

8. The process according to any of Claims 1 to 7, wherein the oxidation is carried out at a temperature ranging from 700 to 1200°C.

9. The process according to any of Claims 1 to 8, wherein the magnetic separation procedure is carried out under magnetic conditions ranging from 0.4 to 10 teslas.

10. The process according to any of Claims 1 to 9, wherein that the resultant rutile phase product has a TiO₂ level of not lower than 90%.

11. The process according to any of Claims 1 to 10, wherein the process until the production of high-quality synthetic rutile products from the ilmenite ore is substantially free of any reduction.
